# EUROPÄISCHE PATENTANMELDUNG

(11) **EP 1 241 328 A1**
(43) Veröffentlichungstag der Anmeldung: **18.09.2002**
(21) Anmeldenummer: 02003865.9
(22) Anmeldetag: 21.02.2002
(51) Int. Cl.: F01N 3/05, F01N 3/20, F01N 7/08

(54) **Abgaskühlelement für einen Abgasstrang einer Brennkraftmaschine**

(30) Priorität: 13.03.2001 DE 10111886
(71) Anmelder: J. Eberspächer GmbH & Co. KG, 73730 Esslingen (DE)
(72) Erfinder: Hofele, Christoph, 73550 Waldstetten (DE); Damson, Björn, Dr., 70569 Stuttgart (DE)

(57) **Zusammenfassung**

Die Erfindung betrifft ein Abgaskühlelement (6) für einen Abgasstrang einer Brennkraftmaschine, insbesondere eines Kraftfahrzeugs, mit einem axial durchströmbaren Außenrohr (7), das eine gasdichte Wandung aufweist, und mit einem Innenrohr (8), das eine gasdurchlässige Wandung aufweist, das im Außenrohr (7) konzentrisch angeordnet ist, das im Außenrohr (7) einen ersten Raum (12) von einem zweiten Raum (13) trennt, dessen erstes axiales Ende (9) offen ausgebildet ist, das im Bereich seines ersten axialen Endes (9) mit seiner Außenseite relativ dicht an die Innenseite des Außenrohrs (7) angeschlossen ist und dessen Außenquerschnitt von seinem ersten axialen Ende (9) bis zu seinem zweiten axialen Ende (10) relativ zum Innenquerschnitt des Außenrohrs (7) abnimmt. Dabei ist der erste Raum (12) des Außenrohrs (7) durch den Innenraum des Innenrohrs (8) gebildet. Der eine Raum (12) des Außenrohrs (7) weist einen Einlaß (14) für das zu kühlende Abgas auf, durch den das Abgas axial in das Abgaskühlelement (6) eintritt. Der andere Raum (13) des Außenrohrs (7) weist einen Auslaß (15) für das gekühlte Abgas auf, durch den das Abgas axial aus dem Abgaskühlelement (6) austritt.

## Beschreibung

Die Erfindung betrifft ein Abgaskühlelement für einen Abgasstrang einer Brennkraftmaschine, insbesondere eines Kraftfahrzeugs. Die Erfindung betrifft außerdem einen Abgaskühler mit mindestens zwei derartigen Abgaskühlelementen.

Bei Brennkraftmaschinen kann es erforderlich sein, die Abgase im Abgasstrang zu kühlen, um dadurch Beschädigungen von Bestandteilen des Abgasstrangs zu verhindern oder um eine ordnungsgemäße Funktion dieser Bestandteile zu gewährleisten. Beispielsweise kann ein solcher Abgasstrang mit einer Abgasreinigungsanlage, insbesondere mit einem NOₓ-Adsorber, ausgestattet sein, wobei die Gefahr einer Beschädigung besteht, wenn die zugeführten Abgase zu heiß sind. Um die Abgase im Abgasstrang zu kühlen, werden Abgaskühlelemente bzw. Abgaskühler der eingangs genannten Art in den Abgasstrang eingesetzt.

Aus der US 5 183 976 ist ein Abgasschalldämpfer bekannt, der ein zylindrisches Außenrohr aufweist, in dem eine erste, tellerförmige Wand angeordnet ist, die eine zentrale Öffnung aufweist und im übrigen gasundurchlässig ausgebildet ist. Axial beabstandet zu dieser ersten Wand ist eine zweite, tellerförmige Wand im Außenrohr angeordnet, die perforiert, also gasdurchlässig ausgebildet ist. Axial zwischen den beiden Wänden erstreckt sich koaxial zum Außenrohr ein zylindrisches Innenrohr, das eine perforierte, also gasdurchlässige Wandung besitzt. An seinen axialen Enden ist das Innenrohr an den beiden Wänden befestigt, wobei das der ersten Wand zugeordnete axiale Ende in die zentrale Öffnung der ersten Wand eingesetzt ist. Das in den Schalldämpfer eintretende Abgas wird durch die erste Wand in das Innenrohr eingeleitet. Ein Teil der in das Innenrohr eingeleiteten Abgase können direkt durch die zweite Wand aus dem Innenrohr in das Außenröhr und von diesem aus dem Schalldämpfer austreten. Der andere Teil der Abgase durchdringt die Wandung des Innenrohrs in radialer Richtung und tritt dort in einen zwischen den Wänden und den Rohren ausgebildeten Ringraum ein. Von diesem Ringraum tritt das Abgas durch die zweite perforierte Wand hindurch und gelangt in einen anderen Abschnitt im Inneren des Außenrohrs, aus dem das Gas aus dem Schalldämpfer austritt.

Auch die EP 0 290 425 B1 zeigt einen Abgasschalldämpfer mit einem zylindrischen Außenrohr, in dem ein zylindrisches Innenrohr koaxial gehaltert ist. Im Inneren des Außenrohrs ist eine scheibenförmige Wand ausgebildet, die eine zentrale Öffnung besitzt, in die das Innenrohr mit einem offenen axialen Ende eingesetzt ist. Das Innenrohr besitzt in einem vom offenen axialen Ende abgewandten Bereich eine radiale Austrittsöffnung, die zu einem Ringraum führt, der in radialer Richtung vom Außenrohr und vom Innenrohr begrenzt ist. In axialer Richtung wird dieser Ringraum einerseits von der vorgenannten Wand und andererseits von einem trichterförmigen Rohr begrenzt. Das trichterförmige Rohr besitzt in seiner Wandung Austrittsöffnungen, die in einen weiteren Ringraum einmünden, der in axialer Richtung vom trichterförmigen Rohr und von einer weiteren Wand begrenzt ist. Vom letztgenannten Ringraum führt ein axiales Austrittsrohr aus dem Schalldämpfer heraus. Das Abgas tritt in den Schalldämpfer ein, gelangt in das Innere des Außenrohrs und in das damit kommunizierende Innere des Innenrohrs. Durch das Innenrohr gelangt das Abgas radial in den ersten Ringraum und von diesem durch die Wandung des trichterförmigen Rohrs in den zweiten Ringraum. Vom zweiten Ringraum treten die Abgas durch das Austrittsrohr aus dem Schalldämpfer aus.

Die vorliegende Erfindung beschäftigt sich mit dem Problem, für ein Abgaskühlelement der eingangs genannten Art einen konstruktiv einfachen Aufbau anzugeben, der eine preiswerte Herstellung des Abgaskühlelements ermöglicht.

Dieses Problem wird erfindungsgemäß durch ein Abgaskühlelement mit den Merkmalen des Anspruchs 1 gelöst.

Die Erfindung beruht auf dem allgemeinen Gedanken, in einem axial vom Abgas durchströmbaren Außenrohr ein Innenrohr einzusetzen, das sich in axialer Richtung in oder entgegen der Abgasströmungsrichtung verjüngt, wobei das Innenrohr eine gasdurchlässige Wandung besitzt und im Außenrohr so angeordnet ist, daß bei einer axialen Durchströmung des Außenrohrs die Wandung des Innenrohrs zwangsläufig durchströmt wird. Durch diese Bauweise wird eine Wärmeübertragung vom Abgas auf das Innenrohr begünstigt. Ein Teil der Wärmeenergie wird dann vom Innenrohr über einen Kontakt mit dem Außenrohr auf das Außenrohr übertragen; ein wesentlicher Teil der Wärmeenergie des Innenrohrs wird jedoch vom Innenrohr auf das Außenrohr abgestrahlt und somit durch Wärmestrahlung auf das Außenrohr übertragen. Vom Außenrohr strahlt die Wärmeenergie dann in die Umgebung ab, wobei das Außenrohr außerdem einer kühlenden Luftströmung ausgesetzt sein kann. Das erfindungsgemäße Abgaskühlelement besteht somit im wesentlichen nur aus zwei Teilen, die relativ einfach herstellbar sind und relativ einfach zusammengebaut werden können.

Um eine kontinuierliche Querschnittsabnahme zur realisieren, kann das Innenrohr im wesentlichen kegelförmig ausgebildet sein. Ebenso kann das Innenrohr im wesentlichen kegelstumpfförmig ausgebildet sein, wobei dann an demjenigen axialen Ende, das den kleineren Querschnitt aufweist, ein Deckel angeordnet ist. Zweckmäßig kann auch dieser Deckel gasdurchlässig ausgebildet sein. Durch die Ausbildung des Innenrohrs als Kegel bzw. Kegelstumpf kann bei entsprechender Baulänge einerseits der Druckabfall im Abgaskühlelement relativ klein gehalten werden, während andererseits eine relativ große Wärmeabstrahlleistung an das Außenrohr erzielbar ist.

Um das Innenrohr gasdurchlässig auszubilden, kann es aus einem perforierten Material, z.B. aus einem Lochblech hergestellt sein, wodurch das Innenrohr besonders preiswert herstellbar ist.

Um das Ansprechverhalten des erfindungsgemäßen Abkühlelements zu verbessern, kann das Innenrohr aus einem relativ dünnwandigen Material hergestellt sein. Dabei ist die Wandungsstärke des Innenrohrs kleiner als die Wandstärke des Außenrohrs.

Das Material, aus dem das Innenrohr hergestellt ist, und/oder eine Beschichtung, die das Innenrohr aufweist, können vorzugsweise im Hinblick auf eine relativ hohe Wärmeübertragung zwischen Abgas und Innenrohr und/oder zwischen Innenrohr und Außenrohr ausgewählt sein. Durch diese Maßnahmen kann der Wirkungsgrad des Abgaskühlelements verbessert werden.

Um die Abstrahlungsleistung des Innenrohrs und/oder des Außenrohrs zu verbessern, können die Wandung des Außenrohrs bzw. die Wandung des Innenrohrs im Hinblick auf eine Vergrößerung der Oberfläche geformt sein. Beispielsweise können die genannten Wandungen wellenförmig ausgebildet sein, um deren Oberfläche zu vergrößern.

Eine weitere Verbesserung der Wärmeübertragung zwischen Innenrohr und Außenrohr mittels Wärmestrahlung kann dadurch erreicht werden, daß die axiale Länge eines Längsabschnitts des Innenrohrs, in dem der Innenquerschnitt des Innenrohrs im wesentlichen ungestuft oder feinstufig abnimmt, wenigstens zweimal, insbesondere fünfmal, so groß ist wie sein größter Durchmesser.

Zusätzlich oder alternativ kann zur Steigerung der Abstrahlungsleistung eine Mantellinie an der Außenseite des Innenrohrs mit einer Mantellinie an der Innenseite des Außenrohrs einen Winkel einschließen, der kleiner als 10°, insbesondere 5° ist. Durch die letztgenannten Merkmale ergibt sich eine relativ langgestreckte Bauweise für das Innenrohr, bei der entlang einer relativ großen axialen Längen die abstrahlende Außenseite des Innenrohrs der angestrahlten Innenseite des Außenrohrs in radialer Richtung gegenüberliegt. Die Strahlungswege sind dadurch relativ kurz. Außerdem sind die Auftreffwinkel, mit denen die Wärmestrahlen auf das Außenrohr auftreffen, im Bereich von 90°, wodurch Reflexionen vermieden werden, was zur Verbesserung der Übertragungsleistung beiträgt.

Das der Erfindung zugrundeliegende Problem wird auch durch einen Abgaskühler mit den Merkmalen des Anspruchs 15 sowie durch eine Verwendung mit den Merkmalen des Anspruchs 18 gelöst.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine Prinzipskizze einer Brennkraftmaschine, deren Abgasstrang ein erfindungsgemäßes Abgaskühlelement enthält,
- Fig. 2: einen Längsschnitt durch ein erfindungsgemäßes Abgaskühlelement,
- Fig. 3: eine vergrößerte Detailansicht auf eine besonders ausgestaltete Durchtrittsöffnung eines Innenrohrs,
- Fig. 4: einen Querschnitt durch eine besondere Ausführungsform eines erfindungsgemäßen Abgaskühlelementes,
- Fig. 5: einen Längsschnitt durch eine weitere besondere Ausführungsform eines Abgaskühlelementes nach der Erfindung,
- Fig. 6: eine schematisierte Ansicht auf einen Abgaskühler nach der Erfindung bei einer ersten Ausführungsform,
- Fig. 7: eine Ansicht wie in Fig. 6, jedoch bei einer zweiten Ausführungsform,
- Fig. 8: eine Ansicht wie in Fig. 6, jedoch bei einer dritten Ausführungsform,
- Fig. 9: einen Längsschnitt durch eine besondere Ausführungsform eines Abgaskühlers, der mit zwei Abgaskühlelementen ausgestattet ist.

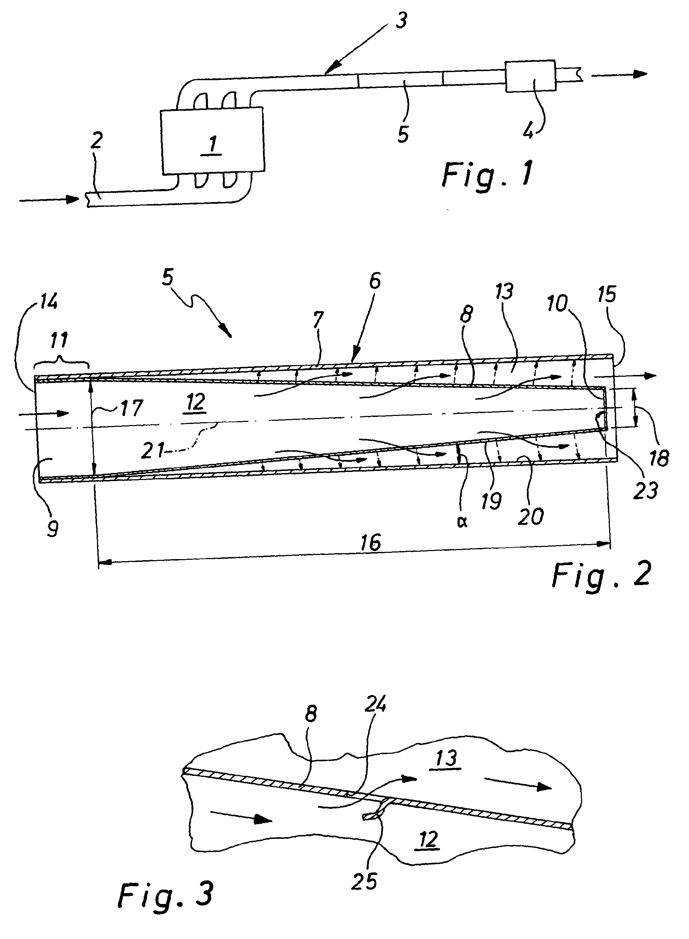

Entsprechend Fig. 1 weist eine Brennkraftmaschine 1, insbesondere eines Kraftfahrzeugs, einen Frischluftstrang 2 sowie einen Abgasstrang 3 auf. In diesem Abgasstrang 3 kann eine Abgasreinigungseinrichtung 4, z.B. eine Katalysatoranordnung, insbesondere ein NOₓ-Adsorber, angeordnet sein. Stromauf dieser Abgasreinigungseinrichtung 4 ist im Abgasstrang 3 ein Abgaskühler 5 angeordnet, der dem Abgas Wärme entzieht, bevor es zur Abgasreinigungseinrichtung 4 gelangt. Der Abgasstrang 3 kann des weiteren mit einer nicht gezeigten Schalldämpfungseinrichtung ausgestattet sein.

Entsprechend Fig. 2 weist der Abgaskühler 5 ein erfindungsgemäßes Abgaskühlelement 6 auf, das aus einem Außenrohr 7 und einem Innenrohr 8 gebildet ist. Das Außenrohr 7 ist axial offen ausgebildet und somit axial vom Abgas durchströmbar. Die Wandung des Außenrohrs 7 ist geschlossen, also gasdicht ausgebildet. Vorzugsweise ist das Außenrohr 7 zylindrisch, insbesondere kreiszylindrisch geformt.

Das Innenrohr 8 ist konzentrisch im Außenrohr 7 angeordnet und besitzt eine gasdurchlässige, insbesondere perforierte Wandung. Ein in Fig. 2 links dargestelltes erstes axiales Ende 9 des Innenrohrs 8 ist offen ausgebildet, während ein in Fig. 2 rechts dargestelltes zweites axiales Ende 10 des Innenrohrs 8 einen Deckel 23 aufweist, der jedoch gasdurchlässig, insbesondere perforiert ausgebildet sein kann. Im Bereich des ersten axialen Endes 9 ist das Innenrohr 8 mit seiner Außenseite relativ dicht an die Innenseite des Außenrohrs 7 angeschlossen. Beispielsweise kann in einem durch eine geschweifte Klammer gekennzeichneten axialen Abschnitt 11 ein Preßsitz und/oder eine Lötverbindung vorgesehen sein.

Das Innenrohr 8 ist in der hier gezeigten, bevorzugten Ausführungsform kegelstumpfförmig ausgebildet. Der Außenquerschnitt des Innenrohrs 8 nimmt vom ersten axialen Ende 9 ab dem axialen Abschnitt 11 bis zum zweiten axialen Ende 10 ab. Durch die Kegelstumpfform des Innenrohrs 8 erfolgt diese Querschnittsabnahme kontinuierlich.

Das Innenrohr 8 trennt im Außenrohr 7 einen ersten Raum 12, der durch den Innenraum des Innenrohrs 8 gebildet ist, von einem Außenraum 13, der sich im wesentlichen radial zwischen Innenrohr 8 und Außenrohr 7 ringförmig erstreckt.

Bei der Darstellung gemäß Fig. 2 ist das Innenrohr 8 lediglich in dem dem ersten axialen Ende 9 zugeordneten Axialabschnitt 11 am Außenrohr 7 fixiert, so daß das zweite axiale Ende 10 freistehend im Außenrohr 7 positioniert ist. Ebenso ist es möglich, im Bereich des zweiten axialen Endes 10 Stege od.dgl. anzuordnen, mit denen das Innenrohr 8 auch im Bereich des zweiten axialen Endes 10 am Außenrohr 7 fixiert ist.

Zur Erläuterung der Funktionsweise des erfindungsgemäßen Abgaskühlelements 6 ist mit Pfeilen eine Abgasströmung symbolhaft eingezeichnet. In der Darstellung gemäß Fig. 2 wird das Abgaskühlelement 6 von links nach rechts durchströmt. Ebenso ist es möglich, das Abgaskühlelement 6 von rechts nach links zu durchströmen.

Der erste Raum 12 weist dementsprechend einen Einlaß 14 auf, durch den das Abgas in axialer Richtung in das Abgaskühlelement 6 eintritt. Da die Wandung des Innenrohrs 8, beispielsweise mittels nicht dargestellter Durchtrittsöffnungen, gasdurchlässig ausgebildet ist, kann das in den ersten Raum 12 eintretende Abgas durch die Wandung des Innenrohrs 8 hindurchtreten und so in den zweiten Raum 13 eindringen. Der zweite Raum 13 weist einen Auslaß 15 auf, durch den das Abgas in axialer Richtung aus dem Abgaskühlelement 6 austritt.

Durch die Umströmung und Durchströmung des Innenrohrs 8 ergibt sich eine Wärmeübertragung vom Abgas an das Innenrohr 8, mit der Folge, daß sich das Abgas beim Durchströmen des Abgaskühlelements 6 abkühlt. Die vom Innenrohr 8 aufgenommene Wärme wird teilweise über den Kontakt im Axialabschnitt 11 mit dem Außenrohr 7 auf das Außenrohr 7 abgeleitet. Ein wesentlicher Anteil der auf das Innenrohr 8 übertragenen Wärmeenergie wird jedoch in Form von Wärmestrahlung vom Innenrohr 8 auf das Außenrohr 7 übertragen. Diese Wärmestrahlung ist durch Pfeile mit unterbrochenen Linien symbolisiert. Die vom Innenrohr 8 auf das Außenrohr 7 übertragene Wärme sowie die direkt von den Abgasen auf das Außenrohr 7 übertragene Wärme wird vom Außenrohr 7 nach außen in die Umgebung des Abgasstrangs 3 abgeleitet und/oder abgestrahlt.

Um eine relativ hohe Kühlleistung des Abgaskühlelements 6 realisieren zu können, kann das Abgaskühlelement 6 folgende Merkmale kumulativ oder alternativ aufweisen:

Das Innenrohr 8 ist aus einem relativ dünnwandigen Material, insbesondere Lochblech, hergestellt, wodurch das Innenrohr 8 relativ schnell erwärmbar ist. Die Materialauswahl für das Innenrohr 8 ist im Hinblick auf eine relativ hohe Wärmeaufnahme und Wärmeübertragung zwischen Abgas und Innenrohr 8 und/oder zwischen Innenrohr 8 und Außenrohr 7 getroffen. Des weiteren kann das Innenrohr 8 eine Beschichtung aufweisen, die ebenfalls im Hinblick auf eine relativ hohe Wärmeübertragung zwischen Abgas und Innenrohr 8 und/oder zwischen Innenrohr 8 und Außenrohr 7 ausgewählt ist.

Das Innenrohr 8 weist einen Längsabschnitt auf, in dem der Innenquerschnitt des Innenrohrs 8 ungestuft oder feinstufig, hier kontinuierlich, abnimmt. Eine axiale Länge 16 dieses Längsabschnitts ist beim erfindungsgemäßen Abgaskühlelement 6 deutlich größer ausgebildet als ein größter Durchmesser 17 dieses Längsabschnitts. Im vorliegenden Fall ist diese axiale Länge 16 etwa fünf- oder sechsmal größer als der größte Durchmesser 17. Hierdurch ergibt sich eine langgestreckte Bauweise für das Innenrohr 8 und somit eine relativ große Oberfläche für das Innenrohr 8, die Wärmeenergie an das Außenrohr 7 abstrahlen kann.

Ein weiteres wichtiges Merkmal wird darin gesehen, daß die Querschnittsabnahme des Innenrohrs 8 entlang der axialen Länge 16 relativ langsam erfolgt, so daß ein kleinster Durchmesser 18, der hier am zweiten axialen Ende 10 vorliegt, noch etwa halb so groß ist wie der größte Durchmesser 17. Diese Bauweise hat gleichzeitig zur Folge, daß eine Mantellinie 19 an der Außenseite des Innenrohrs 8 und eine Mantellinie 20 an der Innenseite des Außenrohrs 7 zwischen sich einen Winkel α einschließen, der relativ klein ist, insbesondere kleiner als 10°, vorzugsweise kleiner als 5°, ist. Im vorliegenden Ausführungsbeispiel beträgt dieser Winkel α etwa 3°. Die beiden Mantellinien 19 und 20 liegen dabei in einer Ebene, in der auch eine gemeinsame Längsmittelachse 21 der Rohre 7 und 8 liegt. Durch diese Bauweise ist das Innenrohr 8 stets relativ nahe am Außenrohr 7 positioniert. Darüber hinaus treffen die vom Innenrohr 8 ausgehenden Wärmestrahlen mehr oder weniger senkrecht auf das Außenrohr 7 auf, so daß Reflexionen vermieden werden.

Die Wärmeübertragung an das Innenrohr 8 kann gemäß Fig. 3 auch dadurch begünstigt werden, daß hier Durchtrittsöffnungen 24 in der Wandung des Innenrohrs 8 jeweils einen in die Anströmseite vorstehenden Randabschnitt 25 aufweisen, der die Durchströmung der Durchtrittsöffnungen 24 unterstützt. Dabei kommt es gerade im Bereich der Durchströmungsöffnungen 24 zu einem intensiven Wärmeübergang zwischen Abgas und Innenrohr 8.

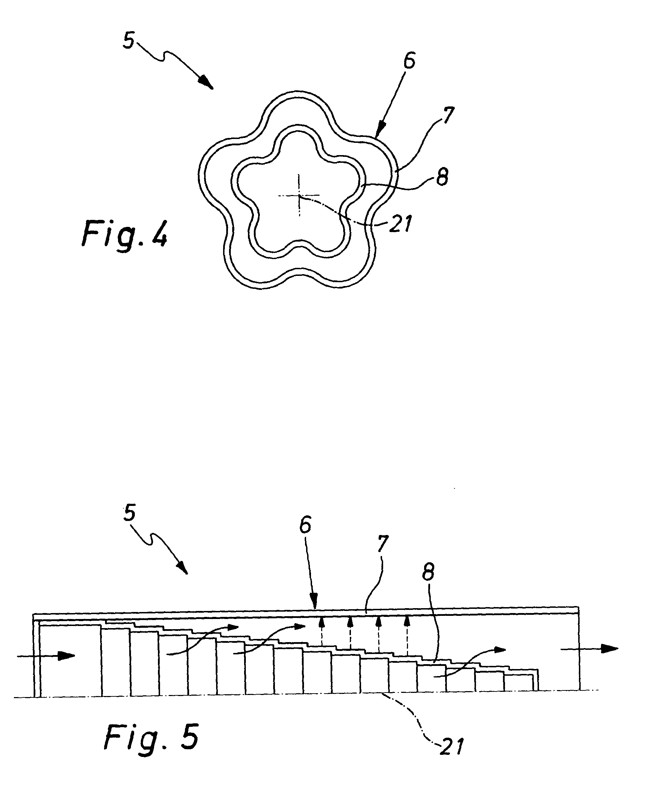

Um die Wärmeaufnahme des Innenrohrs 8 und um die Abstrahlungsleistung des Innenrohrs 8 und des Außenrohrs 7 zu verbessern, können die Wandungen des Innenrohrs 8 und/oder des Außenrohrs 7 im Hinblick auf eine vergrößerte Oberfläche geformt sein. Beispielsweise können Innenrohr 8 und/oder Außenrohr 7 gemäß Fig. 4 einen wellenförmigen Querschnitt aufweisen.

Fig. 5 zeigt ein Abgaskühlelement 6, bei dem das Innenrohr 8 seinen Querschnitt entlang der Längsachse 21 relativ feinstufig ändert. Auch diese Maßnahme führt dazu, daß die Wärmestrahlung relativ senkrecht auf die Wandung des Außenrohrs 7 auftrifft.

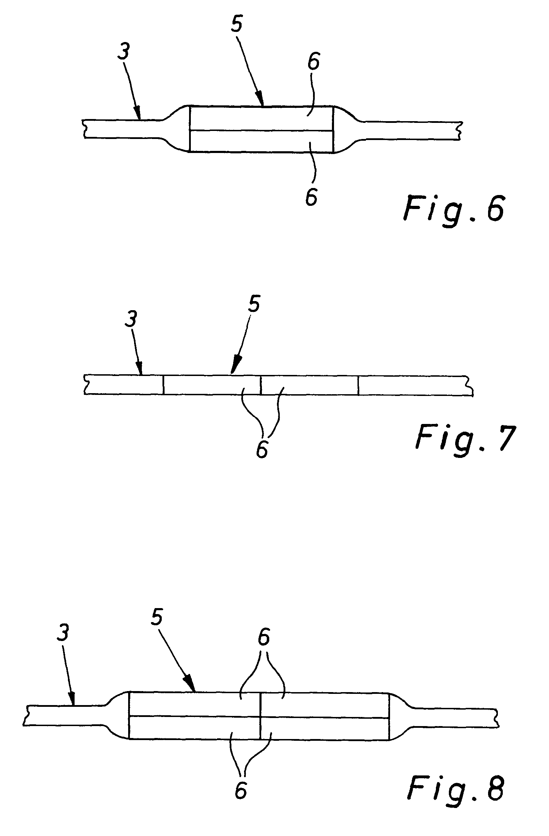

Während ein Abgaskühler 5 grundsätzlich mit einem einzigen erfindungsgemäßen Abgaskühlelement 6 auskommt, kann entsprechend den Fig. 6 bis 9 ein erfindungsgemäßer Abgaskühler 5 auch mehrere solche Abgaskühlelemente 6 aufweisen. Dabei können die Abgaskühlelemente 6 gemäß Fig. 6 parallel angeordnet sein. Es ist klar, daß neben den zwei in Fig. 6 dargestellten Abgaskühlelementen 6 weitere Abgaskühlelemente 6 parallel geschaltet sein können, die insbesondere hinter den in Fig. 6 erkennbaren Abgaskühlelementen 6 angeordnet sind, wodurch sich insgesamt eine dreidimensionale, parallele Anordnung für die Abgaskühlelemente 6 im Abgaskühler 5 ergibt.

Gemäß Fig. 7 können die Abgaskühlelemente 6 auch in Reihe angeordnet sein. Beispielhaft sind in Fig. 7 daher zwei Abgaskühlelemente 6 in Reihe angeordnet. Ebenso können mehr als zwei Abgaskühlelemente 6 in einem Abgaskühler 6 in Reihe angeordnet sein.

Gemäß Fig. 8 können die Abgaskühlelemente 6 bei einer weiteren Ausführungsform eines Abgaskühlers 5 sowohl in Reihe als auch parallel zueinander angeordnet sein. Auch hier ist klar, daß die Abgaskühlelemente 6 auch in dreidimensionaler Richtung parallel angeordnet sein können.

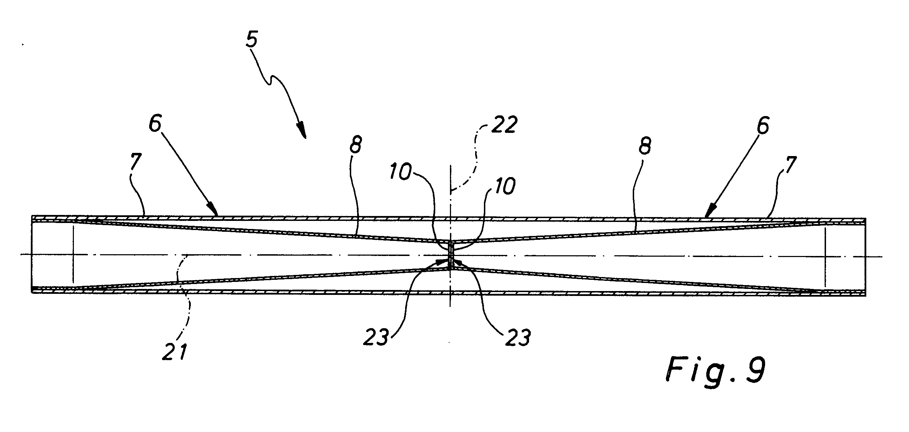

In Fig. 9 ist eine besondere Ausführungsform eines Abgaskühlers 5 dargestellt, bei dem zwei Abgaskühlelemente 6 in Reihe angeordnet sind. Bei dieser speziellen Ausführungsform sind die beiden Abgaskühlelemente 6 bezüglich einer quer zur Längsmittelachse 21 der Rohre 7,8 verlaufenden Symmetrieebene 22 spiegelsymmetrisch angeordnet. Dabei liegen die zweiten axialen Enden 10 bzw. die Deckel 23 der beiden Innenrohre 8 an dieser Symmetrieebene 22 an. Ebenso ist eine Ausführungsform möglich, bei der die Symmetrieebene 22 durch ein gemeinsames zweites axiales Ende 10 beider Innenrohre 8 verläuft. Insbesondere liegt dann ein gemeinsamer Deckel 23 in dieser Symmetrieebene 22.

Bei dieser Ausführungsform bildet der Auslaß des ersten Abgaskühlelements 6 gleichzeitig den Einlaß des zweiten Abgaskühlelements 6. Des weiteren können die aneinander angrenzenden zweiten axialen Enden 10 der beiden Innenrohre 8 aneinander befestigt sein, wodurch sich die Gesamtstabilität der in den Außenrohren 7 angeordneten Innenrohre 8 deutlich verbessert, da die aus den beiden Innenrohren 8 gebildete Einheit somit an den außenliegenden ersten axialen Enden 9 an den Außenrohren 7 fixiert ist. Es ist klar, daß die beiden Außenrohre 7 durch ein gemeinsames, einteiliges Rohrstück gebildet sein können, in das die beiden Innenrohre 8 eingesetzt sind.

### Bezugszeichenliste

- 1: Brennkraftmaschine
- 2: Frischlufttrakt
- 3: Abgastrakt
- 4: Abgasreinigungseinrichtung
- 5: Abgaskühler
- 6: Abgaskühlelement
- 7: Außenrohr
- 8: Innenrohr
- 9: erstes axiales Ende von 8
- 10: zweites axiales Ende von 8
- 11: axialer Abschnitt
- 12: erster Raum
- 13: zweiter Raum
- 14: Einlaß
- 15: Auslaß
- 16: axiale Länge
- 17: größter Durchmesser
- 18: kleinster Durchmesser
- 19: Mantellinie von 8
- 20: Mantellinie von 7
- 21: Längsmittelachse
- 22: Symmetrieebene
- 23: Deckel
- 24: Durchtrittsöffnung
- 25: Randabschnitt

## Patentansprüche

1. Abgaskühlelement für einen Abgasstrang (3) einer Brennkraftmaschine (1), insbesondere eines Kraftfahrzeugs,
• mit einem axial durchströmbaren Außenrohr (7), das eine gasdichte Wandung aufweist,
• mit einem Innenrohr (8),
- das eine gasdurchlässige Wandung aufweist,
- das im Außenrohr (7) konzentrisch angeordnet ist,
- das im Außenrohr (7) einen ersten Raum (12) von einem zweiten Raum (13) trennt,
- dessen erstes axiales Ende (9) offen ausgebildet ist,
- das im Bereich seines ersten axialen Endes (9) mit seiner Außenseite relativ dicht an die Innenseite des Außenrohr (7) angeschlossen ist,
- dessen Außenquerschnitt von seinem ersten axialen Ende (9) bis zu seinem zweiten axialen Ende (10) relativ zum Innenquerschnitt des Außenrohrs (7) abnimmt,
• wobei der erste Raum (12) des Außenrohrs (7) durch den Innenraum des Innenrohrs (8) gebildet ist,
• wobei der eine Raum (12) des Außenrohrs (7) einen Einlaß (14) für das zu kühlende Abgas aufweist, durch den das Abgas axial in das Abgaskühlelement (6) eintritt,
• wobei der andere Raum (13) des Außenrohrs (7) einen Auslaß (15) für das gekühlte Abgas aufweist, durch den das Abgas axial aus dem Abgaskühlelement (6) austritt.

2. Abgaskühlelement nach Anspruch 1,
**dadurch gekennzeichnet,**
**daß** das Innenrohr (8) im wesentlichen kegelförmig ausgebildet ist.

3. Abgaskühlelement nach Anspruch 1,
**dadurch gekennzeichnet,**
**daß** das Innenrohr (8) im wesentlichen kegelstumpffömig ausgebildet ist, wobei am zweiten axialen Ende (10) des Innenrohrs (8) ein Deckel (23) angeordnet ist.

4. Abgaskühlelement nach Anspruch 3,
**dadurch gekennzeichnet,**
**daß** der Deckel (23) gasdurchlässig ausgebildet ist.

5. Abgaskühlelement nach einem der Ansprüche 1 bis 4,
**dadurch gekennzeichnet,**
**daß** das Innenrohr (8) aus einem perforierten Material, z.B. Lochblech, hergestellt ist.

6. Abgaskühlelement nach einem der Ansprüche 1 bis 5,
**dadurch gekennzeichnet,**
**daß** das Innenrohr (8) aus einem relativ dünnwandigen Material hergestellt ist.

7. Abgaskühlelement nach einem der Ansprüche 1 bis 6,
**dadurch gekennzeichnet,**
**daß** das Innenrohr (8) aus einem Material hergestellt ist, das im Hinblick auf eine relativ hohe Wärmeübertragung zwischen Abgas und Innenrohr (8) und/oder zwischen Innenrohr (8) und Außenrohr (7) ausgewählt ist.

8. Abgaskühlelement nach einem der Ansprüche 1 bis 7,
**dadurch gekennzeichnet,**
**daß** das Innenrohr (8) eine Beschichtung aufweist, die im Hinblick auf eine relativ hohe Übertragung zwischen Abgas und Innenrohr (8) und/oder zwischen Innenrohr (8) und Außenrohr (7) ausgewählt ist.

9. Abgaskühlelement nach einem der Ansprüche 1 bis 8,
**dadurch gekennzeichnet,**
**daß** die Wandung des Innenrohrs (8) mehrere Durchtrittsöffnungen (24) aufweist, die jeweils einen in die Anströmseite vorstehenden Randabschnitt (25) aufweisen, der die Durchströmung der Durchtrittsöffnungen (24) begünstigt.

10. Abgaskühlelement nach einem der Ansprüche 1 bis 9,
**dadurch gekennzeichnet,**
**daß** die Wandung des Außenrohrs (7) und/oder die Wandung des Innenrohrs (8) im Hinblick auf eine vergrößerte Oberfläche geformt ist.

11. Abgaskühlelement nach einem der Ansprüche 1 bis 10,
**dadurch gekennzeichnet,**
**daß** der Innenquerschnitt des Innenrohrs (8) in einem Längsabschnitt ungestuft oder feinstufig abnimmt, wobei die axiale Länge (16) dieses Längsabschnitts mindestens zweimal so groß ist wie sein größter Durchmesser (17).

12. Abgaskühlelement nach Anspruch 11,
**dadurch gekennzeichnet,**
**daß** die axiale Länge (16) dieses Längsabschnitts mindestens fünfmal so groß ist wie sein größter Durchmesser (17).

13. Abgaskühlelement nach einem der Ansprüche 1 bis 12,
**dadurch gekennzeichnet,**
**daß** eine Mantellinie (19) an der Außenseite des Innenrohrs (8) und eine Mantellinie (20) an der Innenseite des Außenrohrs (7) einen Winkel (α) zwischen sich einschließen, der kleiner als 10° ist.

14. Abgaskühlelement nach Anspruch 13,
**dadurch gekennzeichnet,**
**daß** der Winkel (α) kleiner als 5° ist.

15. Abgaskühler für einen Abgasstrang einer Brennkraftmaschine, insbesondere eines Kraftfahrzeugs, mit mindestens zwei Abgaskühlelementen (6) nach einem der Ansprüche 1 bis 14, wobei die Abgaskühlelemente (6) parallel und/oder in Reihe angeordnet sind.

16. Abgaskühler nach Anspruch 15,
**dadurch gekennzeichnet,**
**daß** zwei in Reihe angeordnete Abgaskühlelemente (6) bezüglich einer quer zur Längsrichtung (21) der Rohre (7,8) verlaufenden Symmetrieebene (22) spiegelsymmetrisch angeordnet sind.

17. Abgaskühler nach Anspruch 16,
**dadurch gekennzeichnet,**
**daß** die Symmetrieebene (22) an den zweiten axialen Enden (10) der Innenrohre (8) anliegt oder durch ein gemeinsames zweites axiales Ende (10) beider Innenrohre (8) verläuft.

18. Verwendung eines Rohrelements mit den Merkmalen des Abgaskühlelements nach einem der Ansprüche 1 bis 14 in einem Abgasstrang (3) einer Brennkraftmaschine (1), insbesondere eines Kraftfahrzeugs, zum Kühlen der Abgase.
